# EUROPEAN PATENT APPLICATION

(11) **EP 1 010 905 A1**
(43) Date of publication of application: **21.06.2000**
(21) Application number: 98123482.6
(22) Date of filing: 14.12.1998
(51) Int. Cl.: F16C 11/06

(54) **Dust cover for ball joint**

(71) Applicant: Musashi Seimitsu Kogyo Kabushiki Kaisha, Toyohashi-Shi, Aichi-Ken (JP)
(72) Inventor: Tsuji, Tatsuyoshi, Atsumi-Gun, Aichi-Ken (JP); Suzuki, Masaya, Toyohashi-Shi, Aichi-Ken (JP)
(74) Representative: Liesegang, Roland, Dr.-Ing.

(57) **Abstract**

A dust cover (1) to be used in combination with a ball joint having a ball stud (22) and a housing (26) has a lower large open end part (11) and an upper small open end part (2). The large open end part (11) is fastened to the outer surface of the housing (26) with a circlip (12). A reinforcing ring (3) of an L-shaped cross section is embedded in the small open end part (2). The small open end part (2) of the dust cover (1) holds onto the ball stud (22) by its own fastening force strengthened by the reinforcing ring (3) embedded in the small open end part (2). The small open end part (2) has an outer end surface (4) provided with recesses (9), an inner annular lip (5) on the radially inner side of the recesses (9) and an outer annular lip (7) on the radially outer side of the recesses (9). The outer annular lip (7) is higher than the inner annular lip (5), extends radially outward and is thin. Three annular lips (2p, 2q 2r) of a triangular cross section are formed in axially perpendicular arrangements in a substantially middle section of the inner surface (2n) of the small open end part (2) of the dust cover (1).

## Description

### Field of the Invention

The present invention relates to a dust cover for protecting a ball joint included in, for example, an automotive suspension system or an automotive steering system.

### Description of the Related Art

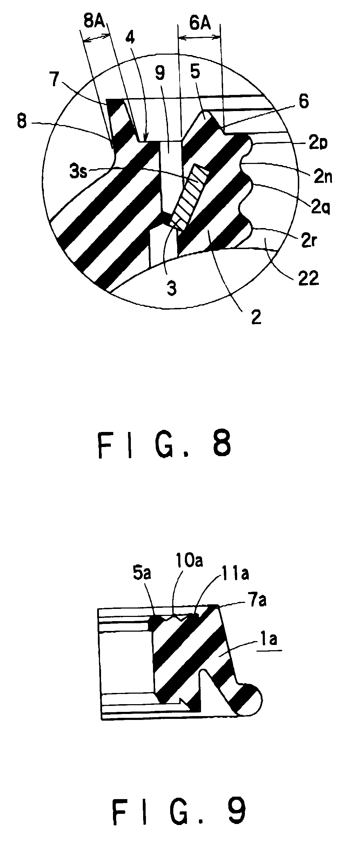

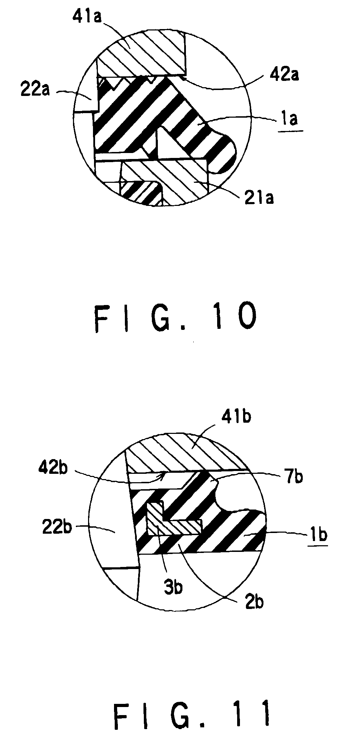

A thick dust cover 1a of a seal ring type disclosed in JP-Y No. 46-29067 seals a gap between a ball joint 21a and a connecting member 41a as shown in Figs. 9 and 10.

As shown in Fig. 11, a bell-shaped dust cover 1b disclosed in JP-U No. 61-133116 has a small open end part 2b fitted on a ball stud 22b of a ball joint, a reinforcing ring 3b embedded in the small open end part 2b, and a lip 7b in contact with a sliding surface 42b of a connecting member 41b.

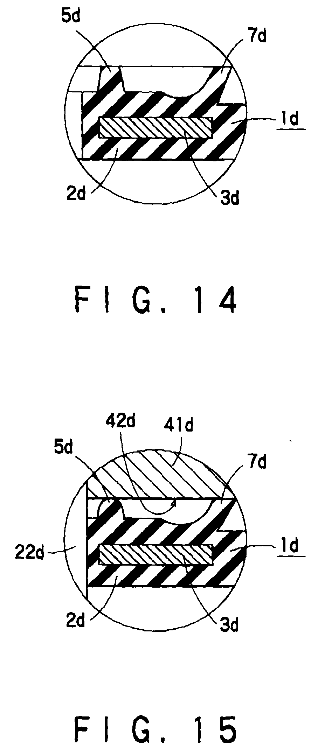

As shown in Figs. 14 and 15, a bell-shaped dust cover 1d disclosed in JP-Y No. 48-9005 has a small open end part 2d, a reinforcing ring 3d embedded in the small open end part 2d, and an inner annular lip 5d and an outer annular lip 7d in contact with a sliding surface 42d of a connecting member 41d.

In the prior art dust cover 1a of a seal ring type shown in Fig. 9, an outermost annular lip 7a projects axially outward beyond the levels of the tips of other annular lips 5a, 10a and 11a. As shown in Fig. 10, the annular lips 5a, 7a, 10a and 11a contribute to sealing the space between the connecting member 41a and the ball joint 21a.

Since the outermost lip 7a has a large radial thickness and projects axially outward beyond the levels of the lips of the other lips 5a, 10a and 11a, the outermost lip 7a is compressed strongly in a substantially vertical direction by the connecting member 41a. Consequently, the outermost lip 7a is pressed firmly against the sliding surface 42a of the connecting member 41a in sliding contact. Accordingly, the outermost lip 7a is abraded rapidly if the sliding surface 42a is rusted, so that the sealing effect of the outermost lip 7a is lost. Additionally, it sometimes occurs that the lips 5a, 7a, 10a and 11a of the dust cover 1a of a seal ring type are unable to follow the movement of the sliding surface 42a and to maintain their sealing function when the ball joint is tilted at a large angle.

The small open end part 2b of the bell-shaped dust cover 1b shown in Fig. 11 is provided on its end surface (its upper surface) with the single lip 7b. The lip 7b is compressed by a connecting member 41b to secure a sealing function. Therefore, the lip 7b is able to remain in contact with the sliding surface 42b of the connecting member 41b to maintain the sealing function even if the ball stud 22b of the ball joint is tilted at a large angle. However, since the lip 7b is in sliding contact with the sliding surface 42b of the connecting member 41b, the lip 7b is abraded rapidly if the sliding surface 42b is rusted, so that the sealing effect of the lip 7b is lost.

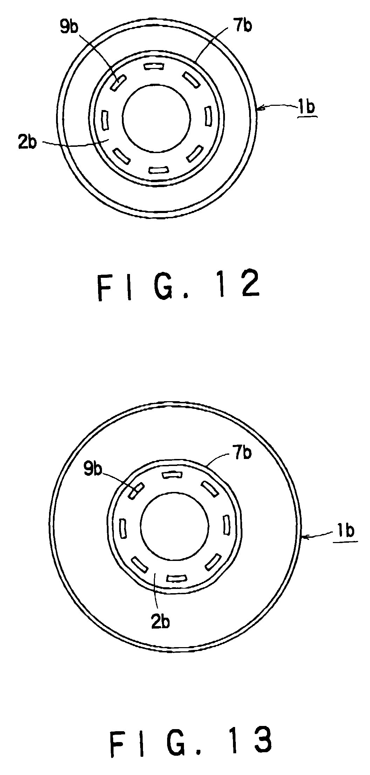

When forming the bell-shaped dust cover 1b, a plurality of grooves 9b are formed in the end surface of the small open end part 2b with a jig for fixing the reinforcing ring 3b to be embedded in the small open end part 2b as shown in Fig. 12. When the dust cover 1b is compressed axially by the connecting member 41b the lip 7b is compressed and shifts toward the adjacent groove 9b as shown in Fig. 13. Consequently, compressive force acting axially on the lip 7b is reduced, deteriorating the sealing function of the dust cover.

In a dust cover 1d having an inner annular lip 5d and an outer annular lip 7d, which are substantially the same in height and thickness, in a free state before being put on a ball joint as shown in Figs. 14 and 15, the lips 5d and 7d are pressed against the sliding surface 42d of the connecting member 41d in the same mode. Therefore, the outer annular lip 7d is abraded more rapidly than the inner annular lip 5d if the sliding surface 42d is rusted because distances of sliding movement relative to the sliding surface 42d of the outer annular lip 7d are greater than those of the inner annular lip 5d.

### DISCLOSURE OF THE INVENTION

Accordingly, it is an object of the present invention to solve those problems in the prior art and to provide a dust cover capable of satisfactorily protecting a ball joint having a ball stud which may be tilted at large angles and of maintaining a reliable sealing function for an extended period of use.

According to one aspect of the present invention, a dust cover for use in combination with a ball joint comprising a ball stud and a housing, said dust cover comprising: a first open end part to be fitted on the ball stud; a second open end part to be fastened to an outer surface of the housing; and a reinforcing ring embedded in the first open end part; is characterized in that the first open end part has an outer end surface provided with a recess, an inner annular lip of a tapered cross section is formed on the outer end surface of the first open end part on a radially inner side of the recess, an outer annular lip of a tapered cross section and of a height along an axis of the first open end part greater than that of the inner annular lip is formed on the outer end part of the first open end part on a radially outer side of the recess so as to extend radially outward, annular lip means are formed on an inner surface of the first open end part to be brought into contact with the ball stud, and the reinforcing ring has a standing part extending toward the inner annular lip.

### BRIEF DESCRIPTION OF THE DRAWINGS

Fig. 1 is a longitudinal sectional view of a dust cover in a first embodiment according to the present invention for protecting a ball joint, in a state before the ball joint is attached to a connecting member;
Fig. 2 is a longitudinal sectional view of the dust cover shown in Fig. 1, in a state after the ball joint has been attached to the connecting member;
Fig. 3 is a plan view of the dust cover shown in Fig. 1;
Fig. 4 is an enlarged view of a part A in Fig. 1;
Fig. 5 is an enlarged view of a part B in Fig. 2;
Fig. 6 is an enlarged fragmentary sectional view of a dust cover in a second embodiment according to the present invention for protecting a ball joint;
Fig. 7 is an enlarged fragmentary sectional view of a dust cover in a third embodiment according to the present invention for protecting a ball joint;
Fig. 8 is an enlarged fragmentary sectional view of a dust cover in a fourth embodiment according to the present invention for protecting a ball joint;
Fig. 9 is an enlarged fragmentary sectional view of a prior art dust cover for protecting a ball joint;
Fig. 10 is an enlarged fragmentary sectional view of the dust cover shown in Fig. 9 as fitted on the ball joint;
Fig. 11 is an enlarged fragmentary sectional view of another prior art dust cover as fitted on a ball joint;
Fig. 12 is a plan view of the dust cover shown in Fig. 11;
Fig. 13 is a plan view of the dust cover shown in Fig. 11 as fitted on a ball joint;
Fig. 14 is an enlarged fragmentary sectional view of a third prior art dust cover for protecting a ball joint; and
Fig. 15 is an enlarged fragmentary sectional view of the dust cover shown in Fig. 14 as fitted on a ball joint.

### DESCRIPTION OF THE PREFERRED EMBODIMENTS

Preferred embodiments of the present invention will be described hereinafter with reference to the accompanying drawings.

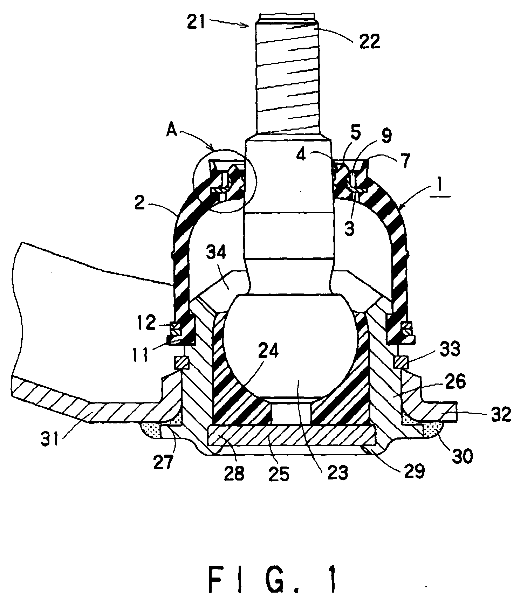

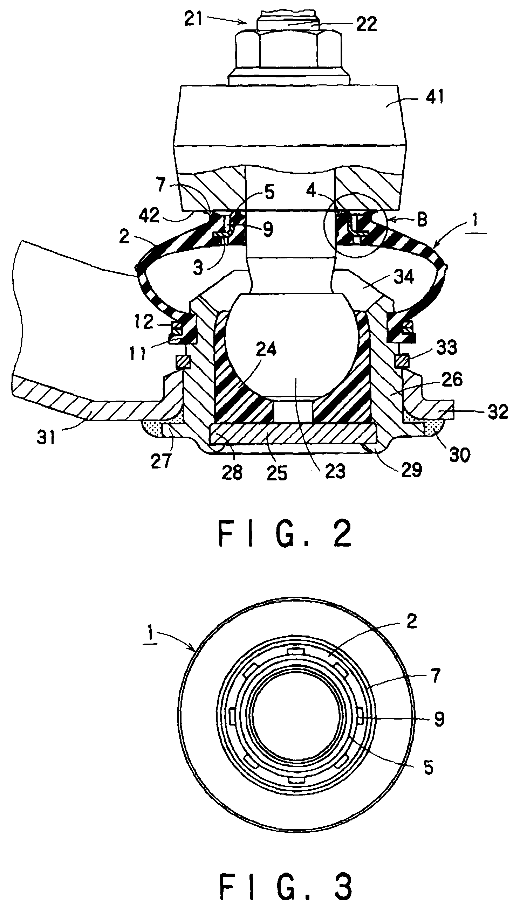

Shown in Figs. 1 and 2 are a dust cover 1 in a first embodiment according to the present invention, a ball joint 21 protected by the dust cover 1, and an arm 31 to which the ball joint 21 is attached. Figs. 1 and 2 show the dust cover 1 in a state before the ball joint 21 is fastened to a connecting member 41, and in a state after the ball joint 21 has been fastened to the connecting member 41, respectively.

Referring to Figs. 1 and 2, the ball joint 21 has a housing 26, and a ball stud 22 supported in a bearing 24 on the housing 26. An end closing plate 25 is attached to a lower end part of the housing 26. The housing 26 is provided with a flange 27. A circular gap between the flange 27 and the arm 31 is sealed by a sealing material 30. The housing 26 is retained on the arm 31 by a retaining ring 33 fitted thereon.

The dust cover 1 is formed in a shape substantially resembling a bell and has a lower large open end part 11 and an upper small open end part 2. The large open end part 11 is fastened to the outer surface of the housing 26 with a circlip 12. A reinforcing ring 3 having an L-shaped cross section and made of a metal, such as a stainless steel, is embedded in the small open end part 2 of the dust cover 1. The small open end part 2 holds firmly onto the ball stud 22 by its own fastening force strengthened by the reinforcing ring 3 of the L-shaped cross section embedded therein.

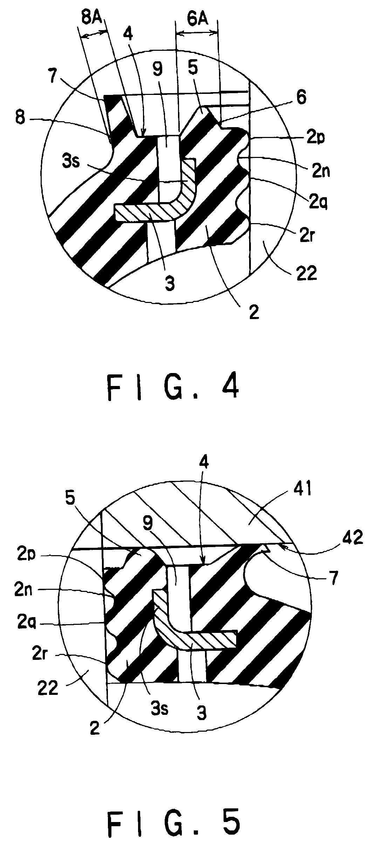

As shown in Fig. 3, the small end part 2 is provided in its outer end surface 4 (its upper surface in Figs. 1 and 2) with eight recesses 9 arranged at equal angular intervals on a circle and formed by a jig for fixedly holding the reinforcing ring 3 to incorporate the same into the small end part 2 when forming the dust cover 1. As shown in Fig. 5, the small end part 2 is provided on its outer end surface 4 with an inner annular lip 5 on the inner side of the recesses 9, and an outer annular lip 7 on the outer side of the recesses 9. As shown in an enlarged view in Fig. 4, the inner annular lip 5 has a isosceles triangular cross section, and the outer annular lip 7 has a tapered cross section and is flared radially outward.

As shown in Fig. 4, the thickness i.e. the dimension in the radial direction 6A of a base part 6 of the inner annular lip 5 is greater than the thickness 8A of a base part 8 of the outer annular lip 7. The outer annular lip 7 has a height, which means a dimension along the axis of the dust cover 1, greater than that of the inner annular lip 5. The outer annular lip 7 is generally thinner than the inner annular lip 5.

As shown in Figs. 4 and 5, three annular lips 2p, 2q and 2r, each of which has a triangular cross section, are formed in axially perpendicular arrangements in an axially middle section of the inner surface 2n of the small open end 2 of the dust cover 1.

As shown in Fig. 5 in an enlarged view, the recesses 9 enable the outer annular lip 7 to bend supplely when depressed by the connecting member 41 and hence the outer annular lip 7 can be kept in light contact with the sliding surface 42 of the connecting member 41. Accordingly, even if the sliding surface 42 is rusted and the outer annular lip 7 is rubbed by the rusted sliding surface 42, the outer annular lip 7 will not rapidly be abraded. The inner annular lip 5 is compressed substantially vertically by the connecting member 41 and is kept firmly in heavy contact with the sliding surface 42 to secure high sealing joint. Even if the sliding surface 42 of the connecting part 41 is rusted, the inner annular lip 5 will not rapidly be abraded because distances of sliding movement relative to the sliding surface 42 of the inner annular lip 5 are short.

The outer annular lip 7 protects the ball joint 21 from large dust, and the inner annular lip 5 protects the ball joint 21 from fine dust and moisture, so that the ball joint 21 is protected from foreign matters and moisture by the cooperative function of the inner annular lip 5 and the outer annular lip 7.

The reinforcing ring 3 has a standing part 3s lying on the inner side of the recesses 9 and extending toward the inner annular lip 5. The standing part 3s of the reinforcing ring 3 prevents the inner annular lip 5 from shifting toward the recesses 9, which prevents the deterioration of the sealing performance of the inner annular lip 5 attributable to the reduction of axial compression of the inner annular lip 5.

The annular lips 2p, 2q and 2r are pressed against the ball stud 22 and the tips thereof are compressed by the radial fastening force strengthened by the reinforcing ring 3. Since the annular lips 2p, 2q and 2r are formed in the axially middle section of the inner surface 2n of the small open end part 2 instead of opposite end sections of the same as mentioned above, the radial fastening force of the reinforcing ring 3 can be effectively applied to the annular lips 2p, 2q and 2r to secure a high sealing joint.

If the stem of the ball stud 22 on which the small open end part 2 of the dust cover 1 is fitted is tapered in a direction away from the spherical head 23 of the ball stud 22, the middle annular lip 2q and the lower annular lip 2r near the spherical head 23 are pressed more firmly against the outer surface of the stem of the ball stud 22 than the upper annular lip 2p. In some cases, the upper annular lip 2p cannot come into contact with the surface of the stem of the ball stud 22.

If the upper annular lip 2p cannot come into contact with the surface of the stem of the ball stud 22, the fastening force is concentrated on the lower annular lip 2r. This makes the lower annular lip 2r abrade remarkably, so that the sealing ability of the small end part 2 of the dust cover 1 for sealing the ball joint 21 is deteriorated.

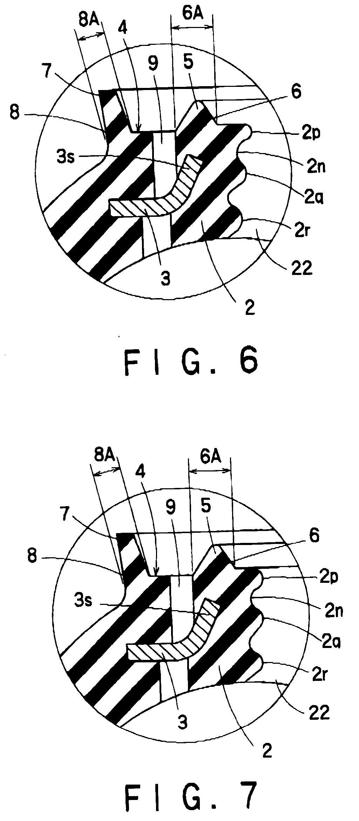

It is preferable to use, in combination with a ball joint having a ball stud 22 provided with a tapered stem, a dust cover 1 in a second embodiment according to the present invention. As shown in Fig. 6, the dust cover 1 in the second embodiment has a small open end part 2 having a inner surface 2n provided with annular lips 2p, 2q and 2r tapered so as to conform to the tapered stem of the ball stud 22, and a reinforcing ring 3 having a standing part 3s tapered so as to conform to the tapered stem of the ball stud 22.

A dust cover 1 in a third embodiment according to the present invention may be used in combination with such a ball joint having a ball stud 22 provided with a tapered stem. As shown in Fig. 7, the dust cover 1 in the third embodiment has a small open end part 2 having a cylindrical inner surface 2n parallel to the axis of the ball stud 22 and provided with annular lips 2p, 2q and 2r, and a reinforcing ring 3 having a standing part 3s tapered so as to conform to the tapered stem of the ball stud 22.

In the dust cover 1 in the third embodiment, the thickness of a portion of the small open end part 2 between the tapered standing part 3s of the reinforcing ring and the lower annular lip 2r is relatively great and hence the portion is elastically compressed relatively greatly. Therefore, the small open end part 2 deforms so as to conform to the tapered stem of the ball stud 22 when the small open end part 2 is put on the stem of the ball stud 22 even if the inside diameters of the annular lips 2p, 2q and 2r are the same when the dust cover 1 is in a natural shape. Consequently, the annular lips 2p, 2q and 2r are pressed substantially uniformly to the stem of the ball stud 22 to achieve high sealing performance.

The taper degree of the standing part 3s need not necessarily be equal to that of the tapered stem of the ball stud 22, and the desired taper degree of the standing part 3s is dependent on the shape and the elasticity of the small open end part 2 of the dust cover 1 and the desire fastening force of the small open end part 2 by which the small open end part 2 holds to the tapered stem of the ball stud 22.

The reinforcing rings 3 employed in the foregoing embodiments have crooked cross sections including the L-shaped cross sections, respectively. The dust cover 1 of the present invention may be provided with a reinforcing ring 3 having only a standing part 3s of a straight cross section, such as a corned disk spring, as shown in Fig. 8.

The number and the shape of the annular lips formed on the inner surface 2n of the small open end part 2 of the dust cover 1, and the material of the reinforcing ring 3 are not limited to those mentioned in the description of the preferred embodiments.

## Claims

1. A dust cover (1) for use in combination with a ball joint comprising a ball stud (22) and a housing (26), said dust cover comprising:
a first open end part (2) to be fitted on the ball stud;
a second open end part (11) to be fastened to an outer surface of the housing; and
a reinforcing ring (3) embedded in the first open end part;
characterized in that the first open end part has an outer end surface (4) provided with a recess (9),
an inner annular lip (5) of a tapered cross section is formed on the outer end surface of the first open end part on a radially inner side of the recess,
an outer annular lip (7) of a tapered cross section and of a height along an axis of the first open end part greater than that of the inner annular lip is formed on the outer end part of the first open end part on a radially outer side of the recess so as to extend radially outward,
annular lip means (2p, 2q, 2r) are formed on an inner surface of the first open end part to be brought into contact with the ball stud, and
the reinforcing ring has a standing part (3s) extending toward the inner annular lip.

2. The dust cover according to claim 1, wherein the standing part of the reinforcing ring is parallel to the axis of the first open end part.

3. The dust cover according to claim 1, wherein the standing part of the reinforcing ring is inclined to the axis of the first open end part.

4. The dust cover according to claim 1, wherein the annular lip means comprises three annular lip, and the three annular lips are formed in an axially middle section of the inner surface of the first open end part to be brought into contact with the ball stud.
